Europäisches Patentamt

European Patent Office

Office européen des brevets

(11) Veröffentlichungsnummer: **0 353 706**

**A2**

(12) ## EUROPÄISCHE PATENTANMELDUNG

(21) Anmeldenummer: **89114177.2**

(22) Anmeldetag: **01.08.89**

(51) Int. Cl.⁴: **G05B 19/405**

(30) Priorität: **02.08.88 DE 8809861 U**

(43) Veröffentlichungstag der Anmeldung:
**07.02.90 Patentblatt 90/06**

(84) Benannte Vertragsstaaten:
**CH DE ES FR GB IT LI**

(71) Anmelder: **MAHO Aktiengesellschaft**
**Postfach 1280 Tiroler Strasse 85**
**D-8962 Pfronten(DE)**

(72) Erfinder: **Babel, Werner**
**Achweg 19**
**D-8962 Pfronten(DE)**

(74) Vertreter: **Patentanwälte Beetz sen. - Beetz**
**jun. Timpe - Siegfried - Schmitt-Fumian-**
**Mayr**
**Steinsdorfstrasse 10**
**D-8000 München 22(DE)**

(54) Steuerpult für Werkzeugmaschinen.

(57) Gegenstand der Erfindung ist ein Steuerpult für Werkzeugmaschinen mit einem Tastenfeld (3), einem Bildschirm (4) und Bedienelementen für einen Cursor (5), die als zwei Touchleisten (6, 7) ausgebildet sind.

Je eine Touchleiste (6, 7) ist seitlich neben je einer Längs- und Schmalseite des Bildschirms (4) rechtwinklig zueinander angeordnet.

F i g.1

## STEUERPULT FÜR WERKZEUGMASCHINEN

Die Erfindung betrifft ein Steuerpult für Werkzeugmaschinen, das einem gemeinsamen Gehäuse ein zur Horizontalen geringfügig nach vorne geneigtes Tastenfeld und einen dahinter vertikal angeordneten Bildschirm mit Bedienelementen für einen Cursor aufweist.

Es ist bereits bekannt, bestimmte Punkte bzw. Stellen auf dem Bildschirm mit Hilfe eines Cursors, beispielsweise einer Maus, eines Pfeiles oder eines anderen Symbols, herauszugreifen um z.B. Unterprogramme eines PC's anzufahren und auf dem Bildschirm sichtbar zu machen. Die Positionierung des Cursors in dem gewünschten Bildschirmpunkt erfolgt bisher durch besondere Elemente, wie Griffel oder andere Handgeräte, deren Bedienung jedoch einige Fertigkeiten und Sorgfalt erfodert.

Aufgabe der Erfindung ist es, die Bedienung des Cursors bei einem Steuerpult für Werkzeugmaschinen zu vereinfachen.

Diese Aufgabe wird erfindungsgemäß dadurch gelöst, daß die Bedienungselemente als zwei Touchleisten ausgebildet sind, die rechtwinklig zueinander im gemeinsamen Gehäuse des Steuerpults angeordnet sein können.

Zweckmäßig sind die beiden Touchleisten seitlich auf dem Tastenfeld angeordnet. Es kann jedoch auch je eine Touchleiste an je einer Längs- und Schmalseite des Bildschirms vorgesehen sein. Vorzugsweise entspricht die Länge jeder Touchleiste der Länge ihrer zugeordneten Bildschirmseite.

Im folgenden werden Ausführungsbeispiele der Erfindung anhand der Zeichnung im einzelnen beschrieben. Es zeigen

Fig. 1 ein Steuerpult mit Tastenfeld, Bildschirm und Tastleisten in perspektivischer Darstellung;

Fig. 2 das Steuerpult nach Fig. 1 mit einer anderen Anordnung der Touchleisten.

Das dargestellte Steuerpult enthält ein gemeinsames Gehäuse 1 mit einem nach vorne weisenden Teil 2, auf dessen Oberseite ein zur Horizontalen unter einem geringen Winkel geneigtes Tastenfeld 3 angeordnet ist. Im hinteren Teil des Gehäuses 1 ist ein Bildschirm 4 zur Vertikalen geringfügig nach hinten geneigt angeordnet. Bestimmte Stellen bzw. Punkte auf dem Bildschirm 4 können mit einem Cursor 5 vom Bediener ausgewählt werden. Als Bedienungselemente zur Positionierung des Cursors 5 im gewünschten Bildschirmpunkt dienen zwei Touchleisten 6 und 7, von denen eine oberhalb der Längsseite und die andere seitlich neben der einen Schmalseite des Bildschirms 4 im Gehäuse 1 angordnet sind.

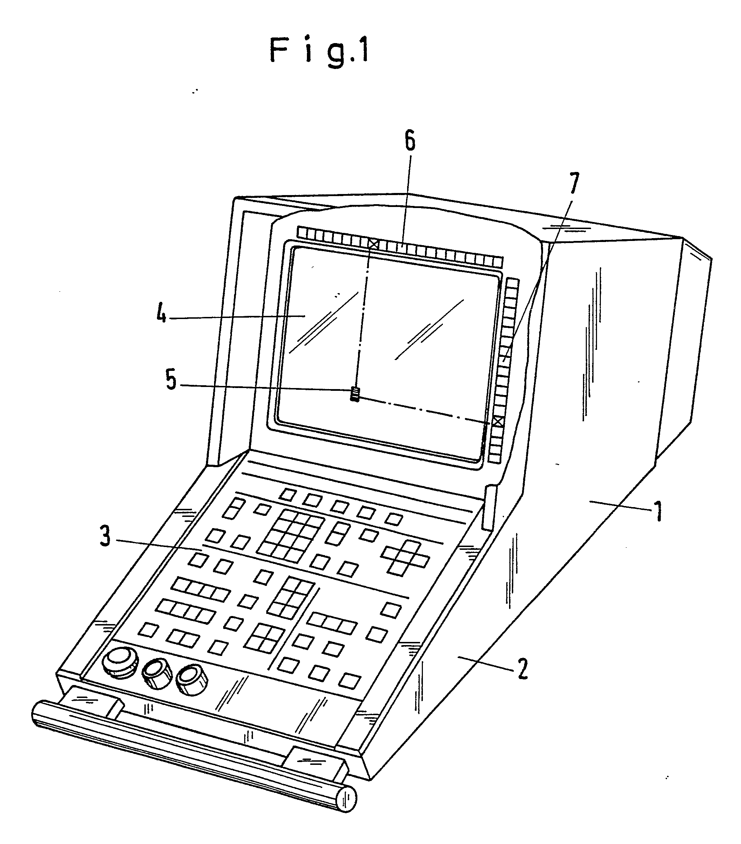

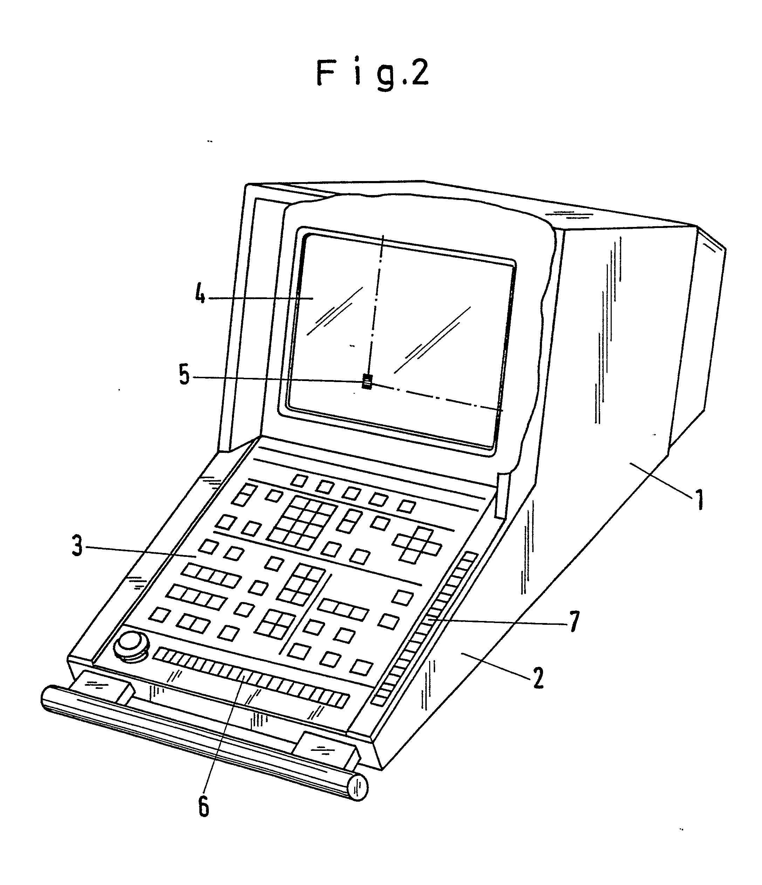

Bei der mit Fig. 1 weitgehend übereinstimmenden Ausführung nach Fig. 2 sind die beiden Touchleisten 6, 7 am oberen bzw. linken Rand des Tastenfeldes 3 rechtwinklig zueinander angeordnet.

Die Länge jeder Touchleiste 6 bzw. 7 sollte fit der Länge der ihr zugeordneten Bildschirmseite gleich sein.

Durch leichten Fingerdruck auf eine der Touchleisten 6 bzw. 7 wird die Position des Cursors 5 auf der entsprechenden Bildschirmkoordinate eingestellt, so daß durch wiederholten Fingerdruck auf der einen und der zweiten Touchleiste der Cursor 5 in jeden beliebigen Punkt auf dem Bildschirm gebracht werden kann.

## Ansprüche

1. Steuerpult für Werkzeugmaschinen mit einem Tastenfeld, einem Bildschirm und Bedienelementen für einen Cursor,
dadurch gekennzeichnet,
daß die Bedienelemente als zwei Touchleisten (6, 7) ausgebildet sind.

2. Steuerpult nach Anspruch 1,
dadurch gekennzeichnet,
daß je eine Touchleiste (6, 7) seitlich neben je einer Längs- und Schmalseite des Bildschirm (4) angeordnet ist.

3. Steuerpult nach Anspruch 1,
dadurch gekennzeichnet,
daß die Touchleisten (6, 7) rechtwinklig zueinander am Tastenfeld (3) angeordnet sind.

4. Steuerpult nach einem der Ansprüche 1 bis 3,
dadurch gekennzeichnet,
daß die Länge einer Touchleiste (6, 7) der Länge der zugehörigen Bildschirmseite entspricht.

# F i g.1

# F i g.2